# FASCICULE DE BREVET EUROPEEN

(11) **EP 1 106 501 B1**
(45) Date de publication et mention de la délivrance du brevet: **21.09.2005**
(21) Numéro de dépôt: 00403433.6
(22) Date de dépôt: 07.12.2000
(51) Int. Cl.: B64C 25/32

(54) **Train d'atterrissage auxiliaire avant pour aéronef**
Zusatzbugfahrwerk für Flugzeuge
Aircraft auxiliary nose landing gear

(30) Priorité: 08.12.1999 FR 9915467
(43) Date de publication de la demande: 13.06.2001
(73) Titulaire: AIRBUS France, 31060 Toulouse (FR)
(72) Inventeur: Dazet, Francis, 31140 Saint Alban (FR); Ciprian, Danilo, 31840 Aussonne (FR); Chaumel, Pascal, 31830 Plaisance du Touch (FR)
(74) Mandataire: Poulin, Gérard

(56) Documents cités:
- EP-A- 0 559 514
- GB-A- 560 316
- US-A- 2 394 496
- US-A- 3 974 988

## Description

### Domaine technique

L'invention concerne un train d'atterrissage auxiliaire avant, prévu pour être implanté sur un aéronef.

Le train d'atterrissage auxiliaire avant selon l'invention peut être utilisé sur tous types d'aéronefs et notamment sur les avions civils et militaires destinés au transport de passagers et de marchandises.

### Etat de la technique antérieure

Le train d'atterrissage d'un avion est conçu pour supporter les différentes charges transmises entre l'avion et le sol et pour permettre le roulage de l'avion à l'atterrissage, au décollage et lors de ses déplacements au sol.

Les charges que le train d'atterrissage doit supporter varient en fonction des conditions de chargement de l'avion, de la vitesse, d'un freinage éventuel et de la trajectoire (ligne droite ou virage). Par ailleurs, ces différentes conditions font également varier la répartition des charges entre le train d'atterrissage auxiliaire avant (appelé "train avant" dans la suite du texte) et le train d'atterrissage principal (appelé "train principal" dans la suite du texte). Ainsi, lorsque l'avion est à l'arrêt, les charges statiques que supporte le train avant sont faibles (5 à 20% du poids de l'avion selon sa géométrie) par rapport à celles qui sont supportées par le train principal. En revanche, dans certaines phases dynamiques, les charges supportées par le train avant peuvent devenir importantes (parfois de l'ordre du double des charges statiques). Le train avant doit alors supporter un effort de compression élevé.

Les normes édictées par les autorités de certification réglementent de façon stricte le comportement de chacun des éléments d'un train d'atterrissage d'avion dans les conditions normales comme dans des conditions exceptionnelles.

Ainsi, dans le cas d'un freinage dynamique, le train avant doit pouvoir reprendre 30% de la charge exercée selon l'axe vertical. Lorsque l'avion est tracté, l'effort supporté par le train avant est dirigé selon l'axe longitudinal de l'avion. Dans le cas d'un atterrissage en crabe, le train avant doit supporter un effort exercé selon l'axe latéral ou transversal de l'avion et dont le niveau atteint 0,8 fois la charge supportée selon l'axe vertical. Le train avant doit également supporter un couple élevé lorsqu'il est orienté alors que l'avion est à l'arrêt. En outre, le train avant doit être dimensionné pour prendre en compte le cas critique d'un décollage avorté, qui correspond à un freinage d'urgence alors que l'avion est à sa masse maximale et légèrement en deçà de sa vitesse de décollage. Lorsque ce cas se produit, le train principal est délesté de 30% de sa charge, qui est reportée sur le train avant.

Par ailleurs, les charges qui sont transférées à la piste par les roues du train d'atterrissage ne doivent pas excéder un seuil de chargement maximal de ladite piste, qui dépend notamment du revêtement utilisé, de la nature du sous-sol, etc...

Enfin, le train avant est orientable afin d'assurer le guidage de l'avion lors de son roulage sur la piste de roulement et lorsque la vitesse de l'avion est insuffisante pour que son guidage soit assuré par la gouverne de direction. Dans le cas d'un éclatement de pneumatique, le guidage de l'avion peut se révéler très difficile à maîtriser.

Dans la pratique, les constructeurs ont été amenés à multiplier le nombre de roues équipant le train avant des avions afin de respecter ces nombreuses contraintes et d'assurer un bon comportement de l'avion au sol. Ainsi, le train avant des avions dont la masse au décollage est inférieure à 250 tonnes est généralement équipé de deux roues, alors que les avions dont la masse au décollage est supérieure à 250 tonnes sont habituellement équipés de trains avant à quatre roues.

En d'autres termes, le train avant des avions est surdimensionné pour prendre en compte des contraintes qui n'apparaissent que dans des phases très courtes d'utilisation de l'avion. Ce surdimensionnement du train avant concerne principalement le nombre de roues.

De ce point de vue, il est à noter que le coût engendré par le changement d'un train de pneumatiques usés est d'autant plus élevé que le nombre de roues équipant le train avant est important. De plus, le fût du train avant doit également être surdimensionné pour tenir compte des moments de torsion engendrés par le dérapage des roues sur la piste lors d'un virage. Un train d'atterrissage qui montre les caractéristiques du préambule de la revendication indépendante est connu du document EP-A-0 559 514.

### Exposé de l'invention

L'invention a précisément pour objet un train avant d'aéronef, dont la conception originale lui permet de n'utiliser qu'un nombre de roues limité dans les conditions d'atterrissage, de décollage et de roulage normales, de telle sorte que le dimensionnement du fût du train ainsi que le coût d'un changement de pneumatiques peuvent être réduits par rapport aux trains avant qui équipent actuellement les avions.

Conformément à l'invention, ce résultat est obtenu au moyen d'un train d'atterrissage auxiliaire avant, pour aéronef, comprenant un groupe principal d'au moins une roue apte à être en contact permanent avec le sol lorsque l'aéronef est au sol, ledit train étant caractérisé en ce qu'il comprend, de plus, un groupe secondaire d'au moins une roue, apte à être normalement écarté du sol lorsque l'aéronef est au sol, tant que les charges transmises au travers du train n'excèdent pas un seuil prédéterminé et que le groupe principal est opérationnel.

En d'autres termes, le train avant conforme à l'invention comprend un groupe principal d'au moins une roue en contact permanent avec la piste lorsque l'avion est au sol, et un groupe secondaire d'au moins une roue qui n'entre en contact avec la piste et ne supporte des charges que dans des conditions de fonctionnement critiques telles qu'un freinage d'urgence consécutif à un décollage avorté ou dans des situations anormales telles que, par exemple, un éclatement du pneumatique d'une roue du groupe principal.

Dans les conditions normales, seules la ou les roues du groupe principal sont donc utilisées et usées. Toutefois, la présence de la ou des roues du groupe secondaire permet de conserver la maîtrise de la trajectoire de l'avion en cas notamment d'éclatement d'un pneumatique, et de répartir uniformément les charges sur la piste lorsque celles-ci augmentent au-delà d'un certain seuil.

Dans un mode de réalisation préféré de l'invention, le train avant comprend une jambe de train d'axe longitudinal sensiblement vertical lorsque l'aéronef est au sol, chaque roue du groupe principal étant montée à l'extrémité inférieure de la jambe de train et chaque roue du groupe secondaire étant montée sur au moins un bras articulé à l'extrémité inférieure de la jambe de train. Des moyens d'actionnement sont alors interposés entre le bras et la jambe de train pour faire pivoter le bras entre une position déployée et une position escamotée.

Afin de bloquer chaque roue du groupe secondaire dans une position telle qu'elle reste bien en contact avec le sol lorsqu'elle est active, des moyens de butée sont avantageusement prévus pour servir d'appui au bras lorsqu'il est en position déployée.

Lorsque l'aéronef est au sol et dans la position déployée du bras, chaque roue du groupe secondaire peut être décalée soit vers l'avant, soit vers l'arrière par rapport à chaque roue du groupe principal.

De façon comparable, lorsque le train d'atterrissage est rentré et dans la position escamotée du bras, chaque roue du groupe secondaire peut être apte à se loger soit vers l'avant, soit vers l'arrière par rapport à chaque roue du groupe principal.

Afin d'assurer un meilleur appui au sol, l'axe de rotation de chaque roue du groupe principal est avantageusement déporté légèrement vers l'avant ou vers l'arrière par rapport à l'axe longitudinal de la jambe de train, lorsque l'aéronef est au sol.

Dans le mode de réalisation préféré de l'invention, chaque roue du groupe secondaire a un diamètre inférieur à celui de chaque roue du groupe principal. Cet agencement procure un gain de place et de masse appréciable.

### Brève description des dessins

On décrira à présent, à titre d'exemples non limitatifs, différents modes de réalisation de l'invention, en se référant aux dessins annexés, dans lesquels :
- les figures 1A et 1B illustrent très schématiquement une roue du groupe principal et une roue du groupe secondaire d'un train avant conforme à l'invention, respectivement dans le cas d'un roulage normal et dans le cas d'un freinage d'urgence ou d'une crevaison ;
- la figure 2 est une vue de côté qui représente l'extrémité d'un train avant selon un premier mode de réalisation de l'invention ;
- la figure 3 est une vue de côté illustrant schématiquement le premier mode de réalisation de l'invention, dans lequel le groupe auxiliaire est placé derrière le groupe principal lorsque le train est rentré (en traits mixtes) et lorsque le train est sorti (en trait plein) ;
- la figure 4 est une vue comparable à la figure 3, illustrant un deuxième mode de réalisation de l'invention, dans lequel le groupe auxiliaire est placé devant le groupe principal lorsque le train est rentré (en traits mixtes) et derrière le groupe principal lorsque le train est sorti (en trait plein) ; et
- la figure 5 est une vue comparable aux figures 3 et 4, illustrant un troisième mode de réalisation de l'invention, dans lequel le groupe auxiliaire est placé devant le groupe principal aussi bien lorsque le train avant est rentré (en traits mixtes) que lorsqu'il est sorti (en trait plein).

### Description détaillée de plusieurs modes de réalisation préférés de l'invention

Dans l'ensemble de la description, les termes "avant" et "arrière" doivent être interprétés en prenant pour référence l'avion sur lequel est implanté le train avant.

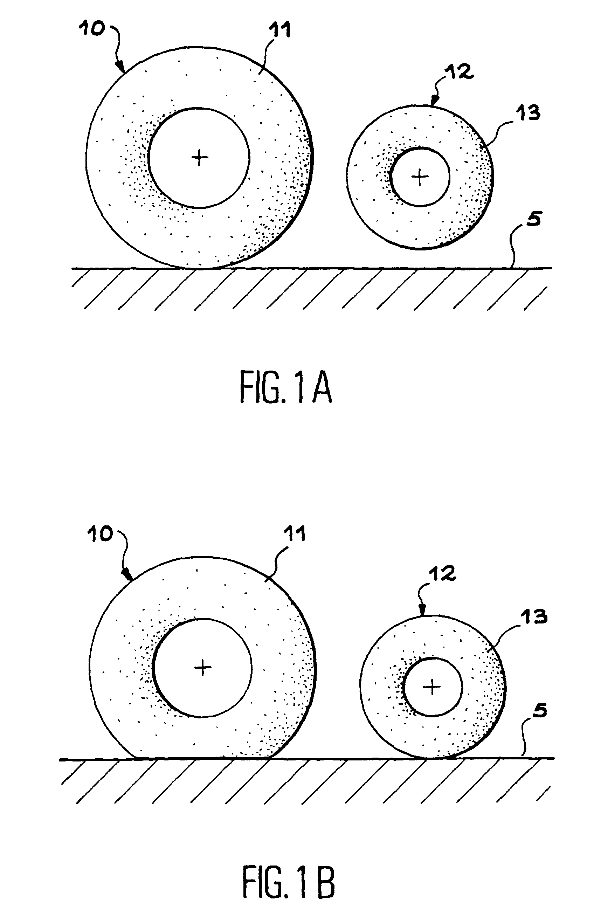

Comme on l'a illustré de façon très schématique sur les figures 1A et 1B, le train d'atterrissage auxiliaire avant conforme à l'invention comprend un groupe principal formé d'au moins une roue 10, ainsi qu'un groupe secondaire également formé d'au moins une roue 12.

Lorsque le train d'atterrissage est sorti, la génératrice inférieure de chaque roue 12 du groupe secondaire est décalée vers le haut d'une distance prédéterminée par rapport à la génératrice inférieure de chaque roue 10 du groupe principal.

Par conséquent, lorsque le train est sorti et que l'avion est au sol, chaque roue 10 du groupe principal est en contact permanent avec le sol par son pneumatique 11. En revanche, dans les conditions normales de roulage de l'avion illustrées sur la figure 1A, chaque roue 12 du groupe secondaire n'est pas en contact avec le sol S. Dans des conditions exceptionnelles telles qu'un freinage d'urgence suite à un décollage avorté ou qu'une crevaison sur une roue 10 du groupe principal, le pneumatique 11 de la roue 10 est déformé de façon telle que le pneumatique 13 de chaque roue 12 du groupe secondaire vient également en appui sur le sol S, comme l'illustre la figure 1B.

Du fait que la ou les roues 12 du groupe secondaire constituent des roues d'appoint qui ne sont actives que dans des cas critiques où la ou les roues 10 du groupe principal sont plus écrasées que dans un cas de fonctionnement normal, on donne avantageusement à chaque roue 12 du groupe secondaire un diamètre plus petit que celui de chaque roue 10 du groupe principal. Cette caractéristique procure un gain de place et de masse appréciable par rapport au train avant des avions existants.

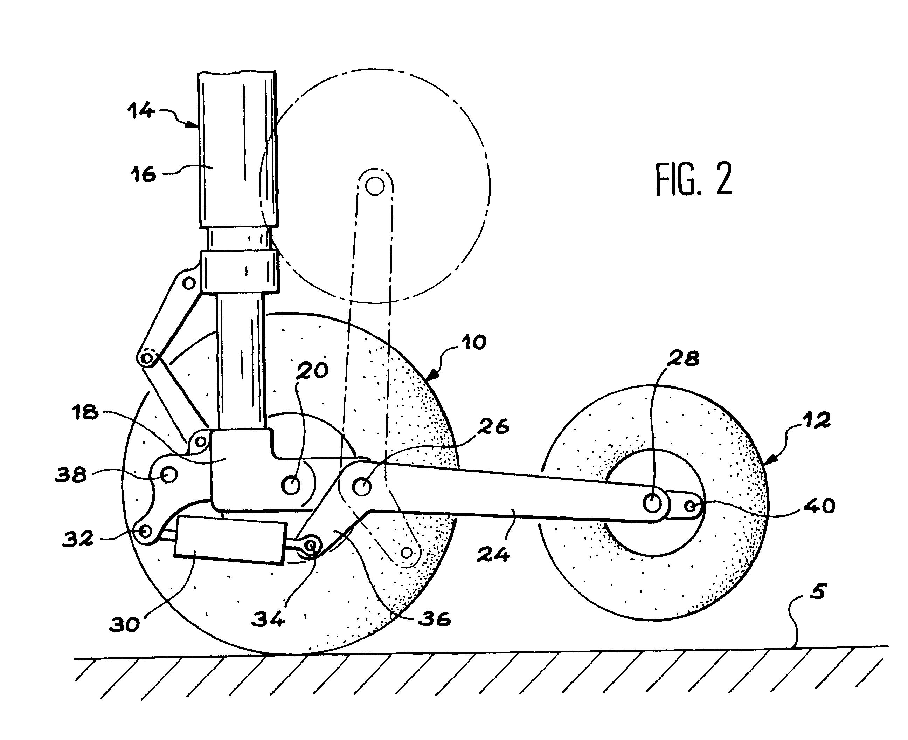

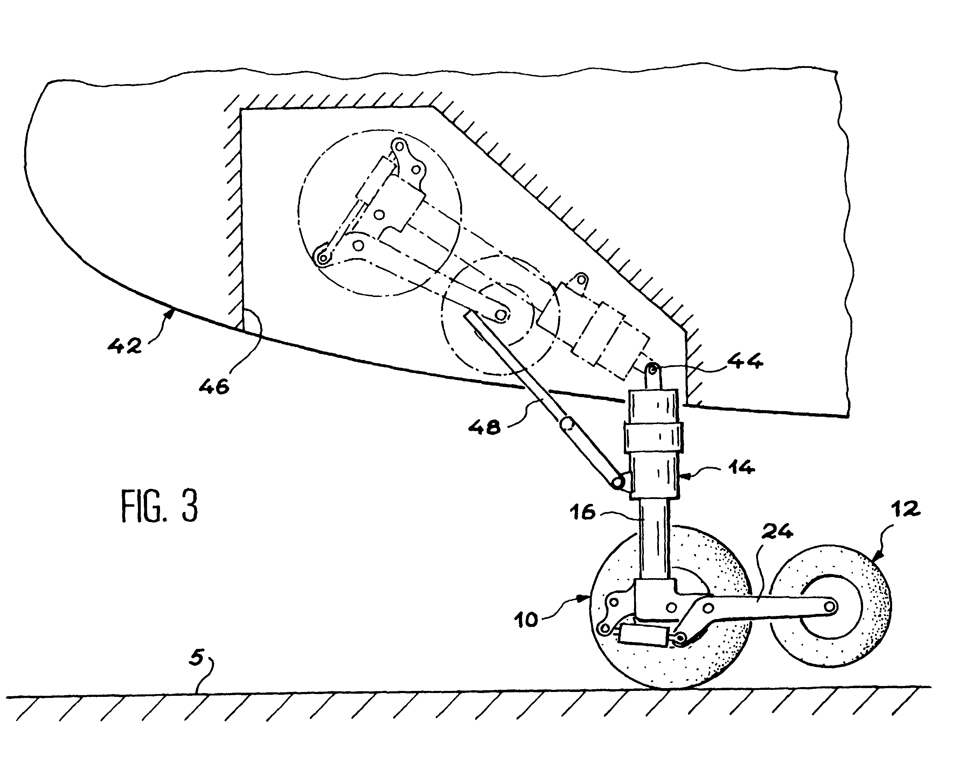

On décrira à présent plus en détails, en se référant aux figures 2 et 3, l'architecture du train avant selon un premier mode de réalisation de l'invention.

La jambe du train avant, désignée de façon générale par la référence 14, présente un axe longitudinal A qui est orienté sensiblement verticalement lorsque le train est sorti. La jambe de train 14 comprend notamment un fût 16 qui intègre un amortisseur principal. A son extrémité inférieure, le fût 16 comprend une console 18 apte à supporter la ou les roues 10 du groupe principal par un axe de rotation 20.

Un actionneur de direction 22 (non représenté), monté sur le fût 16, permet d'orienter la console 18 portant la ou les roues 10 du groupe principal autour de l'axe longitudinal A de la jambe de train 14.

Le train avant illustré sur la figure 2 comprend de plus un bras 24 dont une première extrémité est articulée sur la console 18 par un axe de pivotement 26 orienté parallèlement à l'axe de rotation 20 et dont l'extrémité opposée supporte la ou les roues 12 du groupe secondaire par un axe de rotation 28 parallèle aux axes 20 et 26.

Un actionneur 30 tel que, par exemple, un vérin hydraulique, est interposé entre la console 18 et le bras 24, de façon à pouvoir commander un pivotement de ce dernier, autour de l'axe 26, entre une position déployée illustrée en trait plein sur la figure 2 et une position escamotée illustrée en traits mixtes.

De façon plus précise, une première extrémité de l'actionneur 30 est articulée sur la console 18 par un axe de pivotement 32. L'extrémité opposée de l'actionneur 30 est articulée, par un axe de pivotement 34, sur une biellette 36 solidaire de l'extrémité du bras 24 articulée sur l'axe 26. Les axes 32 et 34 sont orientés parallèlement aux axes 20, 26 et 28 et l'axe longitudinal de l'actionneur 30 est décalé vers le bas par rapport à l'axe de pivotement 26 du bras 24. Par conséquent, une mise en oeuvre de l'actionneur 30 dans l'un ou l'autre sens se traduit par un pivotement du bras 24 entre sa position déployée et sa position escamotée.

Un trou 38 pratiqué à l'avant de la console 18 et un trou 40 pratiqué sur un excroissance prolongeant le bras 24 au-delà de l'axe 28 constituent respectivement un point d'ancrage avant et un point d'ancrage arrière destinés au remorquage de l'avion.

Comme on l'a illustré schématiquement sur la figure 3, l'extrémité supérieure de la jambe de train 14 est articulée sur la structure du fuselage 42 de l'avion par un axe de pivotement 44 orienté transversalement ou latéralement par rapport à l'avion. Cet agencement permet de rentrer le train avant dans une case de train 46 ménagée dans la partie inférieure avant du fuselage 42. Le déplacement du train avant entre son état sorti illustré en trait plein et son état rentré représenté en traits mixtes est commandé de façon connue par un ou plusieurs actionneurs 48.

Dans le premier mode de réalisation de l'invention illustré schématiquement sur les figures 2 et 3, la ou les roues 12 du groupe secondaire sont placées en arrière de la ou des roues 10 du groupe principal lorsque le train est sorti, c'est-à-dire lorsque le bras 24 est amené dans sa position déployée après la mise en oeuvre de l'actionneur 30.

Par ailleurs, lorsque le train avant est rentré comme on l'a illustré en traits mixtes sur la figure 3, le bras 24 occupe sa position escamotée, c'est-à-dire qu'il est basculé vers le haut le long de la jambe de train 14 par la mise en oeuvre de l'actionneur 30. Dans ces conditions, lorsque la jambe de train 14 a elle-même pivoté vers l'avant autour de son axe 44 par la mise en oeuvre de l'actionneur 48, la ou les roues 12 du groupe secondaire se trouvent placées en arrière de la ou des roues 10 du groupe principal, à l'intérieur de la case de train 46.

Dans le premier mode de réalisation de l'invention illustré sur les figures 2 et 3, l'axe de rotation 20 de la ou des roues 10 du groupe principal est décalé légèrement vers l'arrière par rapport à l'axe longitudinal A de la jambe de train 14. Cet agencement permet de procurer un meilleur appui au sol des roues 10 du groupe principal.

Afin de maintenir la ou les roues 12 du groupe secondaire dans leur position active correspondant à la position déployée du bras 24, des moyens de butée rétractable (non représentés) sont commandés automatiquement par l'actionneur 30 lorsque le bras 24 est déployé. Ces moyens de butée procurent alors une butée mécanique qui bloque le bras 24 dans une position telle que la ou les roues 12 restent bien en contact avec le sol lorsqu'elles deviennent actives comme l'illustre la figure 1B.

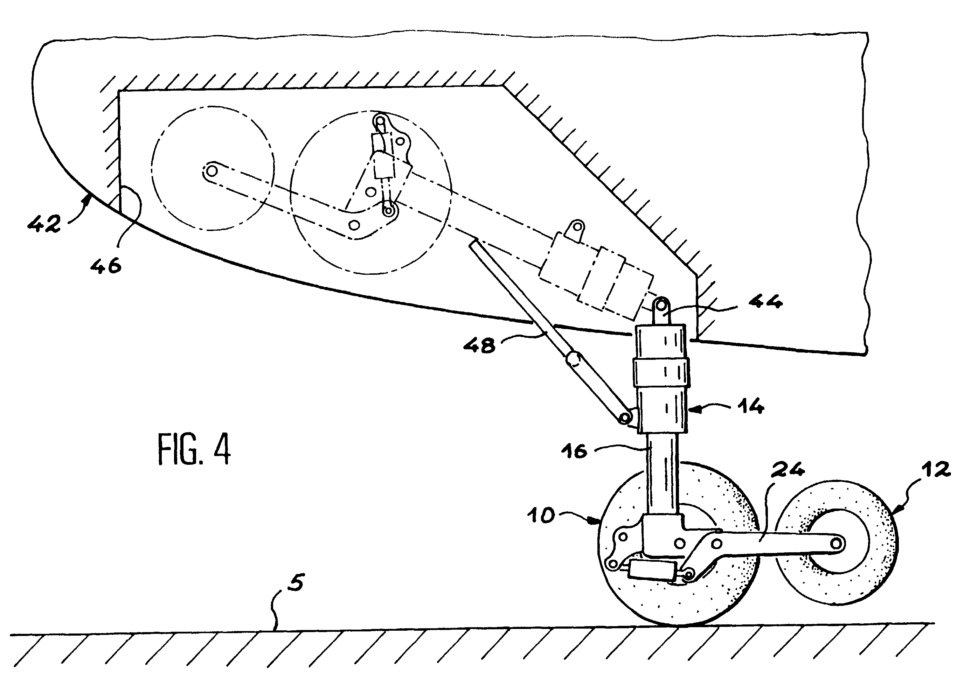

Dans un deuxième mode de réalisation de l'invention illustré schématiquement sur la figure 4, le train avant présente une configuration identique à celle du premier mode de réalisation qui vient d'être décrit, lorsque le train est déployé. En d'autres termes, la ou les roues 12 du groupe secondaire sont placées en arrière de la ou des roues 10 du groupe principal lorsque l'avion est au sol.

En revanche, l'état rentré du train avant est différent. En effet, au lieu de venir se loger dans la case de train 46 en arrière de la ou des roues 10 du groupe principal, la ou les roues 12 du groupe secondaire se placent devant celles-ci. En d'autres termes, au lieu de commander un pivotement vers le haut du bras 24 autour de l'axe 26, l'actionneur 30 a alors pour effet de faire pivoter le bras 24 vers le bas, de façon telle qu'il vient se placer sensiblement dans le prolongement de la jambe de train 14.

Dans ce mode de réalisation comme dans le précédent, il est à noter que le pivotement du bras 24 peut être commandé simultanément à celui de la jambe de train 14, ou avant ou après celui-ci.

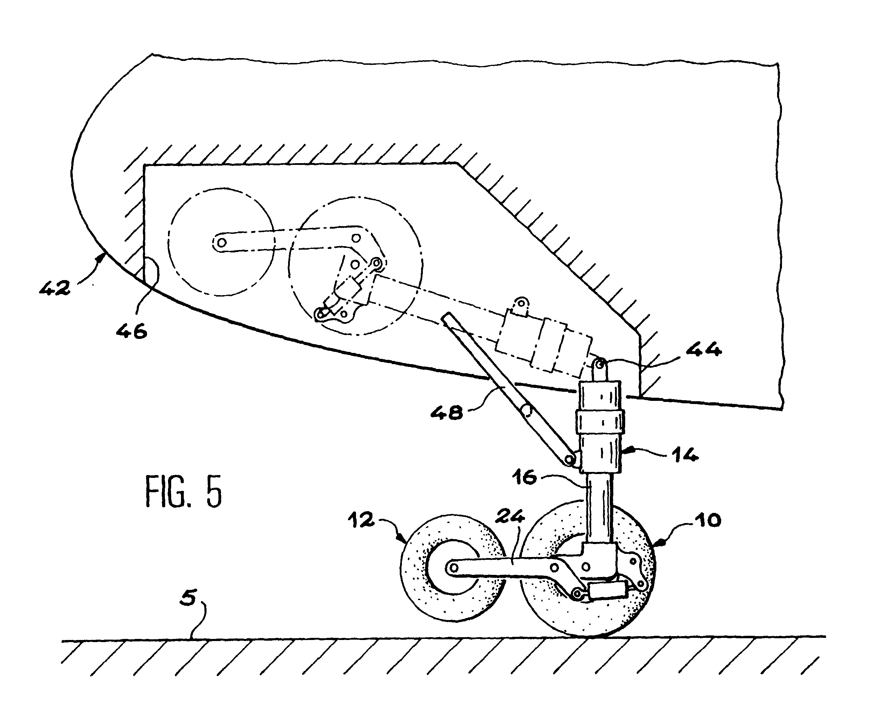

Dans un troisième mode de réalisation de l'invention, illustré schématiquement sur la figure 5, l'état rentré du train avant est identique à celui du deuxième mode de réalisation qui vient d'être décrit en se référant à la figure 4. En revanche, l'agencement du train avant est différent dans son état sorti. En effet, au lieu d'être placées comme précédemment à l'arrière de la ou des roues 10 du groupe principal, la ou les roues 12 du groupe secondaire sont placées dans ce cas à l'avant de celles-ci.

Par ailleurs, dans ce troisième mode de réalisation de l'invention illustré sur la figure 5, l'axe de rotation 20 de la ou des roues 10 du groupe principal est légèrement décalé vers l'avant par rapport à l'axe longitudinal A de la jambe de train 14. Cet agencement, qui est inverse de celui des premier et deuxième modes de réalisation de l'invention, permet également d'améliorer l'appui au sol du train avant.

De façon générale, l'axe de rotation 20 de chaque roue 10 du groupe principal peut être décalé indifféremment vers l'avant ou vers l'arrière par rapport à l'axe longitudinal A de la jambe de train 14, quel que soit le positionnement relatif entre les roues 10 et 12 dans l'état sorti et dans l'état rentré du train.

Dans les deuxième et troisième modes de réalisation de l'invention décrits respectivement en référence aux figures 4 et 5, les moyens de butée escamotables utilisés dans le premier mode de réalisation pour servir d'appui au bras 24 lorsqu'il est déployé, peuvent être remplacés par une butée mécanique fixe prévue directement sur la console 18.

Dans tous les cas, une butée fixe ou escamotable peut également être prévue pour maintenir le bras 24 dans sa position escamotée.

Quel que soit le mode de réalisation et comme on l'a décrit en se référant aux figures 1A et 1B, le train avant conforme à l'invention est agencé de façon telle que, normalement, seules la ou les roues 10 du groupe principal sont en contact avec le sol lorsque l'avion est au sol.

Etant donné que l'usure des pneumatiques intervient principalement au roulage, du fait notamment des frottements importants qui se produisent lors des virages, la ou les roues du groupe secondaire ne s'usent pas car elles ne sont pas utilisées lors de cette phase.

En revanche, dans certaines conditions telles qu'un freinage particulièrement intense ou un éclatement du pneumatique d'une roue du groupe principal, le pneumatique 11 s'écrase et la ou les roues 12 du groupe secondaire deviennent actives. En d'autres termes, chaque roue 12 du groupe secondaire vient alors s'associer à la ou aux roues du groupe principal en entrant en contact avec le sol. Si le nombre de roues de chacun des deux groupes est le même, la charge supportée par chacune des roues du groupe principal est ainsi divisée par deux. De plus, si l'un des pneumatiques vient à éclater, il reste toujours un nombre de roues suffisant pour permettre de conserver la maîtrise de la trajectoire de l'avion au sol.

Par ailleurs, les deux positions susceptibles d'être prises par les roues du groupe secondaire lors de la rentrée du train avant, soit le long du fût 16 du train (figure 3), soit dans le prolongement de ce fût (figures 4 et 5) permettent de réduire sensiblement l'encombrement du train avant lorsqu'il est rentré. En particulier, la place prise par la ou les roues du groupe secondaire dans la case de train, dans le sens latéral ou transversal, est moins grande que dans le cas d'un train avant classique.

En outre, du fait que la ou les roues 12 du groupe secondaire ne sont normalement pas en contact avec le sol lorsque l'avion est à l'arrêt, une orientation forcée des roues s'effectue alors de la même manière que si seules la ou les roues 10 du groupe principal étaient présentes.

Il est à noter que la présence du groupe secondaire peut être utilisée pour faciliter le changement d'une roue du groupe principal. En effet, la course de l'actionneur 30 peut être prévue pour permettre d'amener la ou les roues 12 du groupe secondaire en appui sur le sol, puis de lever la ou les roues 10 du groupe principal, autorisant ainsi leur changement.

Chaque roue 12 du groupe secondaire peut aussi être aisément remplacée puisqu'elle n'est pas normalement en contact avec le sol.

Comme on l'a déjà mentionné, le groupe principal comme le groupe secondaire peuvent comprendre une ou plusieurs roues et le nombre de roues de chacun des groupes peut être identique ou différent, sans sortir du cadre de l'invention.

Par ailleurs, les différents agencements proposés dans les trois modes de réalisation décrits ne sont donnés qu'à titre d'exemple. Ainsi, on comprendra aisément que la ou les roues du groupe secondaire peuvent aussi être placées à l'avant de la ou des roues du groupe principal dans l'état déployé du train avant et à l'arrière de ces mêmes roues dans l'état rentré du train avant.

## Revendications

1. Train d'atterrissage auxiliaire avant, pour aéronef, comprenant un groupe principal J'au moins une roue (10) apte à être en contact permanent avec le sol lorsque l'aéronef est au sol, ledit train comprend, de plus, un groupe secondaire d'au moins une roue (12), **caractérisé en ce que** cette roue (12) est apte à être normalement écarté du sol lorsque l'aéronef est au sol, tant que les charges transmises au travers du train n'excèdent pas un seuil prédéterminé et que le groupe principal est opérationnel.

2. Train d'atterrissage auxiliaire avant selon la revendication 1, dans lequel ledit train comprend une jambe de train (14) d'axe longitudinal (A) sensiblement vertical lorsque l'aéronef est au sol, chaque roue (10) du groupe principal étant montée à l'extrémité inférieure de ladite jambe de train, et chaque roue (12) du groupe secondaire étant montée sur au moins un bras (24) articulé à l'extrémité inférieure de la jambe de train (15), des moyens d'actionnement (30) étant interposés entre ledit bras (24) et la jambe de train pour faire pivoter le bras entre une position déployée et une position escamotée.

3. Train d'atterrissage auxiliaire avant selon la revendication 2, dans lequel des moyens de butée sont aptes à servir d'appui audit bras (24) lorsqu'il est en position déployée.

4. Train d'atterrissage auxiliaire avant selon l'une quelconque des revendications 2 et 3, dans lequel chaque roue (12) du groupe secondaire est décalée vers l'arrière par rapport à chaque roue (10) du groupe principal, dans la position déployée du bras (24), lorsque l'aéronef est au sol.

5. Train d'atterrissage auxiliaire avant selon l'une quelconque des revendications 2 et 3, dans lequel chaque roue (12) du groupe secondaire est décalée vers l'avant par rapport à chaque roue (10) du groupe principal, dans la position déployée du bras (24), lorsque l'aéronef est au sol.

6. Train d'atterrissage auxiliaire avant selon l'une quelconque des revendications 2 à 5, dans lequel chaque roue (12) du groupe secondaire est apte à se loger vers l'avant par rapport à chaque roue (10) du groupe principal, dans la position escamotée du bras (24) et dans une position rentrée du train.

7. Train d'atterrissage auxiliaire avant selon l'une quelconque des revendications 2 à 5, dans lequel chaque roue (12) du groupe secondaire est apte à se loger vers l'arrière par rapport à chaque roue (10) du groupe principal, dans la position escamotée du bras (24) et dans une position rentrée du train.

8. Train d'atterrissage auxiliaire avant selon l'une quelconque des revendications 2 à 7, dans lequel un axe de rotation (20) de chaque roue (10) du groupe principal est déporté légèrement vers l'avant par rapport à l'axe longitudinal(A) de la jambe de train (14), lorsque l'aéronef est au sol.

9. Train d'atterrissage auxiliaire avant selon l'une quelconque des revendications 2 à 7, dans lequel un axe de rotation (20) de chaque roue (10) du groupe principal est déporté légèrement vers l'arrière par rapport à l'axe longitudinal (A) de la jambe de train (19), lorsque l'aéronef est au sol.

10. Train d'atterrissage auxiliaire avant selon l'une quelconque des revendications précédentes, dans lequel chaque roue (12) du groupe secondaire a un diamètre inférieur à celui de chaque roue (10) du groupe principal.

## Patentansprüche

1. Zusatz-Bugfahrwerk für ein Luftfahrzeug mit einer Hauptgruppe aus mindestens einem Rad (10), das in permanentem Kontakt mit dem Boden sein kann, wenn sich das Luftfahrzeug am Boden befindet, wobei das Fahrwerk außerdem eine Sekundärgruppe aus mindestens einem Rad (12) umfasst, **dadurch gekennzeichnet, dass** dieses Rad (12) normalerweise vom Boden abgehoben sein kann, wenn sich das Luftfahrzeug am Boden befindet, solange die über das Fahrwerk übertragenen Lasten einen vorbestimmten Schwellenwert nicht überschreiten und die Hauptgruppe funktionsfähig ist.

2. Zusatz-Bugfahrwerk nach Anspruch 1, wobei das Fahrwerk einen Fahrwerksschenkel (14) mit einer im wesentlichen vertikalen Longitudinalachse A aufweist, wenn sich das Luftfahrzeug am Boden befindet, wobei jedes Rad (10) der Hauptgruppe an dem unteren Ende des Fahrwerkschenkels angebracht ist und jedes Rad (12) der Sekundärgruppe an mindestens einem am unteren Ende des Fahrwerkschenkels (15) gelenkig verbundenen Arm angebracht ist, wobei Betätigungsmittel (30) zwischen den Arm (24) und den Fahrwerksschenkel eingefügt sind, um den Arm zwischen einer ausgefahrenen Position und einer eingezogenen Position schwenken/drehen zu lassen.

3. Zusatz-Bugfahrwerk nach Anspruch 2, wobei Anschlagmittel als Stütze für den Arm (24) dienen können, wenn sich dieser in der ausgefahrenen Position befindet.

4. Zusatz-Bugfahrwerk nach einem der Ansprüche 2 oder 3, wobei jedes Rad (12) der Sekundärgruppe in Bezug auf jedes Rad (10) der Hauptgruppe in der ausgefahrenen Position des Arms (24), wenn sich das Luftfahrzeug am Boden befindet, nach hinten versetzt ist.

5. Zusatz-Bugfahrwerk nach einem der Ansprüche 2 oder 3, wobei jedes Rad (12) der Sekundärgruppe in Bezug auf jedes Rad (10) der Hauptgruppe in der ausgefahrenen Position des Arms (24), wenn sich das Luftfahrzeug am Boden befindet, nach vorne versetzt ist.

6. Zusatz-Bugfahrwerk nach einem der Ansprüche 2 bis 5, wobei sich jedes Rad (12) der Sekundärgruppe in Bezug auf jedes Rad (10) der Hauptgruppe in der eingezogenen Position des Arms (24) und in einer eingefahrenen Position des Fahrwerks vorne positionieren kann.

7. Zusatz-Bugfahrwerk nach einem der Ansprüche 2 bis 5, wobei sich jedes Rad (12) der Sekundärgruppe in Bezug auf jedes Rad (10) der Hauptgruppe in der eingezogenen Position des Arms (24) und in einer eingefahrenen Position des Fahrwerks hinten positionieren kann.

8. Zusatz-Bugfahrwerk nach einem der Ansprüche 2 bis 7, wobei eine Drehachse (20) jedes Rades (10) der Hauptgruppe in Bezug auf die Longitudinalachse A des Fahrwerkschenkels (14) leicht nach vorne verschoben wird bzw. ist, wenn sich das Luftfahrzeug am Boden befindet.

9. Zusatz-Bugfahrwerk nach einem der Ansprüche 2 bis 7, wobei eine Drehachse (20) jedes Rades (10) der Hauptgruppe in Bezug auf die Longitudinalachse A des Fahrwerkschenkels (14) leicht nach hinten verschoben wird bzw. ist, wenn sich das Luftfahrzeug am Boden befindet.

10. Zusatz-Bugfahrwerk nach einem der vorangehenden Ansprüche, wobei jedes Rad (12) der Sekundärgruppe einen kleineren Durchmesser als jedes Rad (10) der Hauptgruppe aufweist.

## Claims

1. Auxiliary nose landing gear for an aircraft, comprising a main group of at least one wheel (10) which can be in permanent contact with the ground when the aircraft is on the ground, said gear also comprising a secondary group of at least one wheel (12) which is **characterized in that** it is normally spaced from the ground when the aircraft is on the ground, whilst the loads transmitted through the gear do not exceed a predetermined threshold and the main group is operational.

2. Auxiliary nose landing gear according to claim 1, wherein said gear comprises a gear leg (14) having a substantially vertical longitudinal axis (A) when the aircraft is on the ground, each wheel (10) of the main group being installed at the lower end of said gear leg and each wheel (12) of the secondary group being installed on at least one articulated arm (24) at the lower end of the gear leg (15), actuating means (30) being interposed between said arm (24) and the gear leg to pivot the arm between an extended position and a retracted position.

3. Auxiliary nose landing gear according to claim 2, wherein abutment means can serve as a support for said arm (24) when the latter is in the extended position.

4. Auxiliary nose landing gear according to either of the claims 2 and 3, wherein each wheel (12) of the secondary group is displaced rearwards with respect to each wheel (10) of the main group, in the extended position of the arm (24), when the aircraft is on the ground.

5. Auxiliary nose landing gear according to either of the claims 2 and 3, wherein each wheel (12) of the secondary group is displaced forwards with respect to each wheel (10) of the main group, in the extended position of the arm (24), when the aircraft is on the ground.

6. Auxiliary nose landing gear according to any one of the claims 2 to 5, wherein each wheel (12) of the secondary group can be positioned forwards with respect to each wheel (10) of the main group, in the retracted position of the arm (24) and in a retracted position of the gear.

7. Auxiliary nose landing gear according to any one of the claims 2 to 5, wherein each wheel (12) of the secondary group can be positioned rearwards with respect to each wheel (10) of the main group, in the retracted position of the arm (24) and in the retracted position of the gear.

8. Auxiliary nose landing gear according to any one of the claims 2 to 7, wherein the axle (20) of each wheel (10) of the main group is slightly forward offset with respect to the longitudinal axis (A) of the gear leg (14), when the aircraft is on the ground.

9. Auxiliary nose landing gear according to any one of the claims 2 to 7, wherein an axle (20) of each wheel (10) of the main group is slightly rearwardly offset with respect to the longitudinal axis (A) of the gear leg (14), when the aircraft is on the ground.

10. Auxiliary nose landing gear according to any one of the preceding claims, wherein each wheel (12) of the secondary group has a smaller diameter than that of each wheel (10) of the main group.
